# EUROPEAN PATENT APPLICATION

(11) **EP 1 870 171 A1**
(43) Date of publication of application: **26.12.2007**
(21) Application number: 06425419.6
(22) Date of filing: 20.06.2006
(51) Int. Cl.: B09B 3/00, C10L 5/44, C11B 13/00, C10J 3/20, C02F 1/52, C11B 1/00, C10G 51/00

(54) **Method and apparatus for the disposal of vegetable water and olive residues**

(71) Applicant: Ferca S.r.l., 20020 Lainate MI (IT)
(72) Inventor: Modica, Giovanni, 20131 Milano (IT); Buccino, Luciano, 16039 Sestri Levante (Prov. of Genova) (IT); Merlini, Sergio, 20154 Milano (IT)
(74) Representative: Alagem Modiano, Lara S.

(57) **Abstract**

A method adapted for the disposal of olive residues originating from the processing of olives. In one embodiment, the invention also allows to dispose of the vegetable water originating from the processing of olives. The method is composed substantially of a combination of steps which, by means of the optional deoiling of the olive residue and subsequent pyrolysis and combustion of the residue, allow to achieve the disposal of a waste which currently is considered of no commercial interest, obtaining instead recycled raw materials that can be used in different fields of technology. For example, the method allows to produce activated charcoal, biodiesel and energy.

## Description

The present invention relates to a method mainly for the disposal of olive residues and to an apparatus for performing the method.

The process for extracting oil from olives produces large quantities of mainly two byproducts: vegetable water (the watery part, hereinafter referenced more simply as "VW") and olive residue (the predominantly solid part). The relative quantities of VW and olive residue, with respect to the weight of the processed olives or of the produced oil, are given in Table 1:

| Table 1 - Byproducts of the production of olive oil | | | | |
|---|---|---|---|---|
| Method of oil extraction | Added water (%) | Olive residue (kg/100 kg of olives) | Olive residue humidity (%) | Vegetable water (kg/100 kg of olives) |
| Discontinuous pressing | 50 | 55-57 | 48-54 | 80-110 |
| Continuous, 2- step | 0-10 | 75-80 | 58-62 | - |
| Continuous, 3- step | 10-20 | 56-60 | 50-52 | 33-35 |

Olive residue represents much of the solid fraction that is present in drupe. The processes used so far allow to separate it from the rest of the components, VW and oil, and its quantity and quality depend on the process that is used. Two-step processes have been applied because, as is evident from Table 1, apparently they do not co-produce VW, which is a waste of low commercial interest which is difficult to dispose of. However, it would be more correct to say that the two-step process type "hides" the VW in the olive residue, which is in fact much more moist than the residue produced by three-step processes, in which VW separation is also provided.

The olive residue that derives from three-step extraction processes is currently the primary source for obtaining so-called olive-residue oil. However, since the method for the extraction of olive-residue oil occurs by using hexane, it is hindered by the presence of water, and the moist olive residues that derive from two-step processes are not applied in this field.

Moreover, since at present there are no valid techniques capable of recovering industrially the deoiled olive residues, it is evident why both olive residues produced by two-step processes and deoiled olive residues are, for all practical purposes, a waste of no commercial interest.

At the same time, however, olive residues are an ideal substrate for the growth of molds, bacteria, yeasts, which proliferate therein, generating highly polluting decomposition liquids and causing the emission of bad odors. Therefore, the disposal of olive residues must take into account their high polluting power, and therefore it is often necessary to resort to expensive special landfills.

At present, there is news of attempts to use moist olive residues as fertilizer (in view of their high content of mineral salts and organic substances), but the poor results that have been obtained suggest skepticism as to the true usefulness of this solution. An attempt has also been made to reuse moist olive residue as is as a fuel, but this technical solution has been found to be extremely difficult, mainly due to the large amount of water that is present, which reduces by over 50% its heating value, which in general does not exceed 2000 kcal/kg.

The need is therefore strongly felt for an alternative solution, which is more convenient and effective than the solutions conventionally adopted for the disposal of solid waste originating from the production of olive oil and in particular of moist and deoiled olive residues.

The aim of the present invention is therefore to provide a method for the disposal of olive residues that overcomes the drawbacks of the

### background art.

An object is to provide a method as described above which allows final and economically attractive disposal of olive residues, both moist and already-deoiled, and in particular of moist olive residues.

Another object is to provide a method as defined above that allows to convert olive residues into products that have such chemical and physical characteristics as to allow their reuse in the industrial production chain as recycled raw materials.

Another object is to provide a method as defined above which allows the disposal, with a single process, not only of olive residues but also of other oil waste, in particular vegetable water.

Another object is to provide an apparatus particularly for performing a method as defined above.

This aim and these and other objects are achieved by a method for the disposal of solid or semisolid waste originating from the production of olive oil, which comprises the step of subjecting the waste to a step of pyrolysis.

The aim and objects of the invention are also achieved by an apparatus for pyrolyzing solid waste originating from the production of olive oil.

It is understood that any characteristic that is mentioned with reference to a single aspect of the invention but can also refer to other aspects is to be considered equally valid as regards these last aspects even if it is not repeated explicitly.

In a first aspect, the invention relates to a method for the disposal of a solid or semisolid waste originating from the production of olive oil, which comprises the step of:
(A) subjecting said waste to pyrolysis, thus recovering a carbon residue and removing a volatile organic fraction contained initially in said waste.

The expression "solid or semisolid waste originating from the production of olive oil" is used to reference the solid fraction of the olives that remains after the extraction of the olive oil. The expression "solid or semisolid waste originating from the production of olive oil" preferably designates olive residue of any quality and with any degree of humidity. An olive residue originating from so-called "two-step" olive oil extraction processes is typically more humid, whereas an olive residue that derives from so-called "three-step" olive oil extraction processes is typically less humid. Preferably, however, the olive residue has a degree of humidity ranging from 48% to 62% by weight on the total weight of the olive residue.

The method according to the invention can be applied to any type of olive residue, optionally olive residue that is already deoiled. It is also understood that the waste processed with the method according to the invention can be a specific type of olive residue or a mixture of olive residues of different types. The expression "type of olive residue" is used to reference olive residue characterized substantially by a specific degree of humidity or a specific humidity range.

The terms "disposal" or "dispose" are used to reference the conversion of the treated waste into products characterized by the absence of polluting power and potentially useful as recycled raw materials in the industrial field or as energy source.

In one embodiment, the solid or semisolid waste is olive residue that has not yet been deoiled and originates from a three-step continuous olive oil extraction process; the method according to the invention comprises the following steps, to be performed in the order in which they are listed below:
(A1) deoiling said waste, thus obtaining a solid portion and an oily liquid portion, and
(A) subjecting the solid portion obtained from step (A1) to a step of pyrolysis, thus recovering a carbon residue and removing a volatile organic fraction contained initially in said waste.

If instead the olive residue originates from a two-step process, due to its high water content it is not convenient to perform deoiling (step A1) and advantageously one proceeds directly with the pyrolysis step (step A).

The term "pyrolysis" is used to reference a process which, by way of thermal decomposition, breaks the chemical bonds of the complex organic substances that are present in the waste until simpler molecules are obtained. It is performed in a conventional manner, by heating the waste or its solid portion in a furnace in the absence of oxygen, obtaining a volatile organic fraction and a solid residue. The qualitative and quantitative composition of the gases and vapors of the volatile organic fraction can vary according to the initial qualities of the waste and according to the treatment conditions of pyrolysis. Pyrolytic decomposition can be performed advantageously in an apparatus known as pyrolysis unit, of the type commercially available.

In the pyrolysis of a humid waste, such as olive residue, converting the water that is present into steam requires a certain expenditure of energy. The resulting water vapor, however, then reacts with the carbon and hydrocarbons that constitute other products of pyrolysis, leading to the generation of CO₂ and H₂ as follows:

C + 2H₂O --> CO₂ + 2H₂

CₙHₙ + 2nH₂O --> nCO₂ + 2nH₂

The heating temperature of the pyrolysis step ranges from 450°C to 650°C, while the contact time varies between 30 minutes (if performed at 450°C) and 20 minutes (if performed at 650°C), depending on the selected temperature.

The expression "volatile organic fraction" is used to reference the volatile fraction produced in the pyrolysis process, which generally comprises substantially hydrogen, hydrocarbons, phenols, alcohols, carbon dioxide and acids. Some qualitative variations are in any case possible depending on the (natural) variability of the composition of the treated waste.

The products of pyrolysis and of any deoiling can then be subjected to additional steps in order to obtain recycled raw materials and energy. In this regard, steps (A1) and (A) defined above can be coupled to one or more of the following optional steps, the presence whereof is advantageous:
(B) subjecting the oily liquid portion obtained from step (A1), also known as "olive-residue oil", to a transesterification reaction with one or more lower alcohols selected among methyl alcohol, ethyl alcohol, or mixtures thereof, thus converting it into biodiesel;
(C) subjecting the volatile organic fraction removed in step (A) to catalytic combustion, thus recovering energy contained in the chemical bonds of the molecules that are present in said volatile organic fraction;
(D) subjecting the carbon residue recovered in step (A) to activation with water vapor;
wherein steps (B), (C) and (D) can be performed in any mutual order, but after steps (A1) and (A).

In a highly preferred embodiment, the method according to the invention comprises all steps (A1), (A), (B), (C) and (D).

The term "alcohols" is used to reference methyl alcohol, ethyl alcohol or mixtures thereof, optionally mixed with water. The alcohols are those used typically to prepare biodiesel starting from oily substrates.

The term "biodiesel" references a liquid biofuel, which is generally clear and amber-colored and is obtained entirely from vegetable oil (in this case, olive-residue oil). The process for transesterification of olive-residue oil has the purpose of converting the base oil into the intended ester and of removing the glycerin that forms in the reaction. After this process, differently from simple vegetable oil, biodiesel has combustion properties that are similar to those of petroleum-derived Diesel fuel and can replace it in most of its applications.

The term "activation" of carbon is used to reference thermal activation, i.e., an endothermic treatment with water vapor at a high temperature (400-600°C) adapted to clear the pores that are present within the carbon residue obtained from pyrolysis. In an advantageous embodiment, the heat required for activation is recovered with the catalytic combustion of the volatile organic fraction.

The expression "catalytic combustion" is used to reference a process in which the volatile organic fraction isolated by pyrolysis is converted substantially into CO₂ and H₂O, generating heat. According to a highly preferred embodiment of the invention, the step of catalytic combustion occurs at a temperature ranging from 400 to 600°C and in the presence of a catalyst bed based on commercial mixed oxides selected advantageously among chromites, molybdenum oxides, cobalt oxides, iron oxides and oxides of other transition metals. In these conditions, it has been found that catalytic combustion occurs without forming nitrogen oxides NOₓ and toxic halogenated polycycles (for example dioxins), at the same time ensuring complete combustion of the aromatic polycyclic hydrocarbons that are present in the volatile organic fraction isolated by pyrolysis of the olive residue. The expression "aromatic polycyclic hydrocarbons" (APH) is used to reference natural and synthetic organic molecules produced by petroleum-related activities and by natural and man-made processes of pyrolysis of organic matter. These compounds are chemically highly hydrophobic and are characterized by substantial persistence in the environment and by the tendency to bioaccumulate in animal and plant tissues due to their marked lipophilicity. APH include substances such as naphthalene, phenantrene, anthracene, benzo(a)anthracene and above all benzo(a)pyrene.

In a highly preferred embodiment, the volatile organic fraction removed by pyrolysis (step (A)) and in output from the pyrolysis unit, before being sent to catalytic combustion (step (C)) is mixed beforehand with:
- air, taken for example from the environment, in order to lower its temperature, and with
- a recycled portion of gases produced by the catalytic combustion of volatile organic fractions burned earlier. This solution in fact allows to reduce the percentage of combustible products of volatile organic fractions and to avoid an excessive rise of the temperature of the catalyst, triggering processes of sintering of the catalytic particles and of deactivation thereof.

The mixture thus composed is subjected to step (C), making it flow advantageously through a bed of conventional catalyst for catalytic combustion, where the bed is as defined above. It is understood in any case that it is also possible to adopt other technical solutions used conventionally for catalytic combustion. Likewise, the mixed oxides can be replaced partially or totally with technically equivalent catalysts.

The burnt gases in output from catalytic combustion generally have a temperature ranging from 450°C to 600°C. They can be subjected advantageously to an additional cooling step (C2), for example by passing them through a water heat exchanger, typically recovering steam at 10-15 bars, to be used for example in a subsequent additional step for generating power in a turbine-alternator system. As an alternative to, or in combination with, step (C2), the burnt gases in output from step (C) can be subjected totally or partially to a step (C3) in which their heat energy is used to generate, by way of conventional techniques, process steam typically at 5-10 bars or hot water.

At the end of the catalytic combustion step, inert ash is recovered which represents the unburnt inorganic residues originally present in the treated solid or semisolid waste. This ash can be for example mixed with agricultural soils, since they provide conditioning oligoelements, such as iron, potassium, phosphor and magnesium.

In the invention, the term "energy" references equally any form of energy, preferably heat and/or electric energy.

In a highly preferred step of the invention, the method can comprise the steps required for the disposal of vegetable waters (VW), wherein said steps are described in the co-pending application entitled "Method, apparatus and synergistic composition for the disposal of agroalimentary wastewater", by the same Applicant as the present application and filed on the same date as the present application.

VW are the third product, in addition to olive residue and olive oil, of olive processing. VW are an aqueous waste which generally contains organic and/or inorganic substances in solution and in suspension at a concentration that is higher than allowed by currently applicable statutory provisions for their disposal in surface bodies of water (such as for example rivers, lakes, ponds, seas) or deep bodies of water. The molecules of commercial interest typically contained in solution in VW include one or more among amino acids, sugars, polyphenols, and tannins. The recovery of these substances might occur selectively according to their molecular weight (MW) by means of molecular filtration techniques (ultrafiltration, microfiltration, reverse osmosis). However, the execution of these techniques is based on membranes the pores whereof would be clogged rapidly by the solids (micellar substances, colloids, macroscopic particles) suspended in the VW, and said solids must therefore be removed beforehand. The use of a synergistic composition as described below solves this problem, since it eliminates, by coagulation-flocculation, the solids suspended in the VW but does not also cause the coprecipitation of the valuable organic molecules in solution, which can therefore be recovered subsequently, selectively and with high purity, for example by molecular filtration. In the highly advantageous embodiment of the invention in which the disposal of olive residue is combined with the disposal of VW, it is therefore possible to dispose of all the (solid and liquid) components of the waste originating from the chain of operations for producing olive oil.

In this embodiment, hereinafter referenced more simply as "combined" method, the invention comprises the following two groups of steps, wherein
the first group comprises:
A) subjecting to pyrolysis a solid or semisolid waste originating from the production of olive oil, thus recovering a carbon waste and removing a volatile organic fraction contained initially in said waste;
   and the second group comprises:
   (a) placing in contact at least one VW with a composition comprising at least one clay and at least one polyelectrolyte, so as to trigger coagulation-flocculation of the solids suspended in said at least one VW and determine the formation of a solid component and a liquid component;
wherein the two groups of steps can be performed independently in series, in parallel, simultaneously, sequentially or separately over time.

The expression "separately over time" can also mean several months apart, provided that the measures for correct preservation of VW described hereinafter are applied.

In the embodiment in which the solid or semisolid waste is olive residue that has not yet been deoiled and originates from a continuous three-step process for the production of olive oil, the first group of steps comprises:
(A1) deoiling said waste, thus obtaining a solid portion and an oily liquid portion, and
(A) subjecting the solid portion obtained from step (A1) to a step of pyrolysis, thus recovering a carbon residue and removing a volatile organic fraction contained initially in said waste.

The expression "trigger coagulation-flocculation" is used to mean that the addition of the coagulation-flocculation composition determines first of all the flocculation of the suspended solids and the possible aggregation of the flocs. The flocculated substances therefore tend to settle naturally, although in a highly preferred embodiment settling is accelerated and optimized by centrifugation. As settling progresses, the VW thus separates into two phases: a solid phase, which contains the previously suspended solids, and a clarified liquid phase, which lies above the solid mass and contains the solids that have not coprecipitated with the suspended solids.

The expression "suspended solids" references the particles suspended in the aqueous phase of the VW, which per se would settle too slowly or not at all. Many factors can hinder settling, such as the presence on the solids of surface charges of the same sign, high chemical-physical affinity (polarity) of the solids with respect to water molecules, and the small size or unsuitable ratio between size and density. Typically, eliminating suspended solids means removing from the VW a fraction that corresponds to a percentage ranging from 30% to 60%, preferably from 30% to 50% by weight, of all the substances that are present (in suspension and in solution) initially in the VW.

The acronym "COD" references chemical oxygen demand, a parameter which indicates the total oxygen demand of a wastewater.

The acronym "BOD₅" references biochemical oxygen demand, a parameter which indicates the oxygen demand of a wastewater in order to oxidize the degradable organic substances that are present therein, on the part of aerobic microorganisms.

The composition described here triggers coagulation-flocculation of the suspended substances more rapidly and effectively, completely and efficiently than known solutions, thus facilitating their flocculation and sedimentation (either natural or assisted) as well as the clarification of the remaining liquid. Differently from known methods, the present invention allows to remove from a VW all the suspended solids that have a molecular weight of more than 2000 daltons without causing coprecipitation of the solutes.

The solid substances that are eliminated and can be recovered with coagulation-fluctuation typically comprise proteins, polysaccharides, cellulose and fiber. These substances can then be used as recycled raw material in the production of animal fodder, since they are rich in nitrogenous components but have no toxicity, since the components of the coagulating-flocculating composition are entirely non-toxic.

The clarified solution obtained with coagulation-flocculation contains organic and/or inorganic substances in solution, such as mineral salts, sugars, alcohols, polyphenols, flavonoids, which potentially can be recovered with suitable molecular filtration systems, described hereinafter.

The coagulating-flocculating composition comprises at least one clay, preferably bentonite, and at least one polyelectrolyte. In this composition, clay and polyelectrolytes have demonstrated surprisingly a synergistic activity in triggering the coagulation-flocculation of the solid substances suspended in the VW.

The term "polyelectrolyte" is used to reference an organic substance, generally a polymer of repeating units provided with at least one polar group type. These groups dissociate in an aqueous environment, charging the polyelectrolyte. The polyelectrolytes that are useful in the invention can have free charges of the same and/or opposite sign, either positive or negative. The combined use of at least one anionic polyelectrolyte and at least one cationic polyelectrolyte, advantageously as defined above, is preferred. Due to the charges that it carries, the polyelectrolyte allows to neutralize any charges of opposite sign that are present on the particles suspended in the VW, facilitating their coagulation and spontaneous or assisted separation.

Examples of classes of polyelectrolytes that are useful in the invention are cationic and anionic polyelectrolytes. The cationic polyelectrolytes are preferably selected among acrylic polymers and copolymers typically characterized by a molecular weight of more than 10⁶, copolymers obtained typically by condensation of primary and secondary amines with medium-low molecular weight, and mixtures thereof. The anionic polyelectrolytes are preferably copolymers and polymers having a high or medium-low molecular weight, preferably selected among acrylamide copolymers, sodium acrylates, and mixtures thereof.

The clay is preferably finely divided clay, optionally in aqueous suspension. In a highly preferred embodiment, the clay is bentonite, even more preferably "food-grade" bentonite, especially if one decides to use the recovered solid fraction in the formulation of animal fodder.

In the composition according to the invention, the at least one clay can be present in a quantity ranging from 2.8 g/kg of VW to 17.5 g/kg of VW, preferably from 7 g/kg of VW to 14.5 g/kg of VW, more preferably equal to 10.7 g/kg of VW, while the at least one polyelectrolyte can be present in a quantity ranging from 0.14 g/kg of VW to 0.75 g/kg of VW, preferably from 0.25 g/kg of VW to 0.6 g/kg of VW, more preferably equal to 0.48 g/kg of VW.

In a highly preferred embodiment, both the clay and the polyelectrolyte are mixed with the VW in the form of aqueous dispersions. In this embodiment, for 700 g of VW it is advantageous to add approximately 150 g of an aqueous dispersion of 50 g of bentonite per liter of water and 170 g of an aqueous dispersion of 2 g of polyelectrolyte per liter of water.

The composition according to the invention does not form tars and does not contain toxic ingredients.

In VW, the solids recovered after flocculation generally have a nitrogen content, expressed as the element, in the range of approximately 3.5-4% by weight on the total weight of the recovered solid, which expressed as raw protein is equivalent to approximately 22.75-26% by weight on the total weight of the recovered solid. Fructooligosaccharides are also generally present in a quantity ranging approximately from 8% to 15% by weight on the total weight of the recovered solid. Both nitrogen and fructooligosaccharides are substances whose presence is advantageous in fodders.

If one decides to use the recovered solids in the formulation of fodders, the presence of clay, especially if bentonite, increases their commercial value, because this ingredient is already used conventionally as an additive in the preparation of granulated fodder as it facilitates extrusion operations and has the ability to absorb intestinal gases and any heavy metals that might be present.

It has been found surprisingly that the place of origin of the VW and the period of its production causes a significant variation in its reactivity with respect to the flocculating substances. For these reasons, it is preferable to add at least two polyelectrolytes, i.e., at least one cationic one and at least one anionic one, as defined above. The tests conducted on diffrent types of VW have confirmed in any case that the use of a synergistic composition of at least one clay and at least one polyelectrolyte allows to separate an aqueous phase which is substantially free from suspended solid substances which are reactive with respect to clay. Substances which are reactive with respect to clay are defined as substances that are present in industrial wastewater and interact with said clay by bonding chemically or by being absorbed into the micropores that are present in clay. Examples of these substances are proteins, fibers and mucilages.

In a preferred embodiment of the "combined" method, the second group of steps comprises the following steps, to be performed in the order in which they are listed:
a) placing at least one VW in contact with a composition comprising at least one clay and at least one polyelectrolyte, so as to trigger coagulation-flocculation of the solids suspended in said at least one VW and form a solid component and a liquid component,
b) separating the solid-liquid components of the flocculated VW of step a), preferably by means of one or more steps of decantation, filtration, centrifugation, more preferably by means of at least centrifugation, so as to obtain a solid mass and a liquid,
b1) optionally drying the solid mass obtained from step b), so as to convert it into a solid which can be used in the fodder sector,
c) separating, depending on their molecular weight, the different substances that are contained in solution in the liquid obtained in step b), by means of one or more molecular filtration techniques preferably selected among ultrafiltration, microfiltration, reverse osmosis, more preferably all three methods, to be performed in the order in which they are presented here.

The combination of steps a) and b) entails an advantage with respect to conventional methods, in which coagulation-flocculation and subsequent separation of the sludge (solid mass of step a)) occur in longer times and by means of a greater number of steps. From step c) it is possible to obtain purified water with a low COD (i.e., a COD within the limits set for potable water, typically less than 160 mg/l) and a second liquid, in one or more portions which can be characterized depending on the MW of the substances contained therein, in which the mineral salts and the molecules contained in solution in the liquid isolated by step b) have been concentrated.

In summary, by performing steps a)-c), the following types of products are recovered:
- from steps a) and b): a sludge (solid mass) which contains the solid substances initially suspended in the VW. The sludge generally comprises proteins, polysaccharides, cellulose and fiber, and can be used for example in the preparation of fodder additives;
- from step c): one or more liquid concentrates, which contain natural substances having a variable molecular weight, for example alcohols, sugars, polyphenols and mineral salts, preserved initially from coprecipitation during coagulation-flocculation and then selected finely and segregated into the different concentrates depending on their molecular weight. These substances can be used as recycled raw material in the context of the chemical-pharmaceutical, cosmetic and food industry, optionally after further purification. Moreover, if reverse osmosis is used specifically, purified water with a low COD is obtained which can be used for irrigation, recycled to the production process or returned without limitations to the natural hydrogeologic cycle.

The recovery of clean water (pure water, i.e., water within the limits defined by currently applicable statutory provisions for being classified as potable) is particularly advantageous if the water is reused in the same industrial process from which the treated VW derives. For example, it can be used to extract olive oil, whose production areas historically have scarce water supplies. The clean water can also be reused in the context of the method according to the invention, for example to prepare the aqueous suspension of clay.

After triggering coagulation-flocculation in step a), it can be advantageous to leave the at least one VW in contact with the coagulating-flocculating composition according to the invention until the flocs that have formed also aggregate and their spontaneous precipitation occurs, of course if this is allowed by their size. The necessary contact time can be assessed simply by the average person skilled in the art by resorting to ordinary common knowledge.

In another embodiment of the "combined" method, the second group of steps comprises an additional step a1), which prepares for step a), in which the at least one VW that is to be disposed of is stored appropriately so as to prevent its putrefaction/going rancid due to the contamination of microorganisms that are present in the environment.

In one embodiment, step a1) comprises storing the at least one VW out of contact with air, for example by storing it in suitable tanks or containers in which the freshly produced VW remains while waiting for treatment.

In one embodiment, step a1) comprises ensuring absence of contact with air by using a suitable hermetic closure of the containers and preferably by also causing the flow, within the collection containers, of an inert gas, for example nitrogen, in slight overpressure with respect to the atmospheric pressure. In this manner, penetration of air and of particulate is prevented, substantially eliminating contamination caused by molds, yeasts and bacteria.

Step a1) is particularly advantageous because VW contains organic substances, which are an easy substrate for microbial growth and proliferation. Conventional storage of VW occurs in open tanks, in contact with air, which are often not very clean. In such conditions, spontaneous processes of microbiological fermentation are rapidly triggered which make the VW become rancid. Performing step a1) is therefore particularly advantageous in the case of cooperative plants dedicated to the disposal of waste produced by oil mills, as it avoids the need to treat the VW immediately. Another advantage of step a1) arises from the observation that VW production is highly seasonal. If one had to use a process for disposing of VW simultaneously with its production, one would need the availability of a compact in-line plant which would operate only to a limited extent of its potential. By providing step a1) it is instead possible to use a larger cooperative plant, keeping it active throughout the year, with an evident saving on production and treatment costs.

In an advantageous embodiment of step c) in order to prevent the pores of the molecular filtration membranes from being clogged over time by the non-permeating substances, it is advantageous to pressurize the liquid to be filtered and send it onto the surface of the separator or separators tangentially (tangential filtration) at such a speed as to produce permeation effectively but also remove continuously the layer of substances that the stream of liquid tends to deposit on the surface of the separator. By proceeding in this manner it is possible to separate the substances efficiently and extend the working life of the separator.

In the embodiment in which at least one molecular filtration step is provided, two fluids are recovered (optionally after combining the individual permeates if multiple identical separators are present): the first fluid (recovered fraction) contains the substances whose dimensions are large enough to be stopped by the microfiltration, ultrafiltration or osmosis membranes, whereas the second fluid (permeate) contains the substances that are small enough to pass through the separators. The volume ratio between the two fluids can be made to change according to the requirements between approximately 99 permeate/1 recovered fraction and approximately 90 permeate/10 recovered fraction by selecting the cut-off of the membranes. The permeate can be used without further treatments for example for fertilizing irrigation, since it has a total content of substances generally lower than 0.5 g/l. The separated fraction can instead be used for example as recycled raw material to produce additives for fodders or to recover the valuable organic substances that are present therein.

If one wishes to obtain extremely clean water to be reused for example in industrial processes (such as the process for milling olives), it is advantageous to feed the permeate from microfiltration and/or ultrafiltration through one or more reverse-osmosis modules (separators). The membranes that are present in the reverse-osmosis module are crossed only by the water, which is now free from all substances, including ions. Pure water and a concentrate rich in salts and substances with very low molecular weight are thus recovered from the osmosis process. Said concentrate can be used for example in the fodder field but also in the cosmetic or pharmacological field. In the case of VW, this concentrate is for example very rich in polyphenols.

All the steps described above can be performed at ambient temperature, and the separations of the substances do not provide for phase variations, and therefore the energy consumption of the process is very low. Moreover, in all the steps of the method according to the invention, the choice of the values of parameters such as for example times, temperatures, and types of equipment to be used is left to the person skilled in the art depending on the type of product and on the choices of the operator, by using general common knowledge as a basis.

In a further aspect, the invention relates to an apparatus for performing the method defined above, wherein said apparatus necessarily comprises means for performing the pyrolysis of a solid or semisolid waste originating from the production of olive oil, preferably olive residues. These means are, for example, a conventional pyrolysis unit.

Optionally, upstream of the means for performing pyrolysis, the apparatus also comprises means for deoiling the waste. Said means are for example an extractor using a solvent, typically hexane, for recovering the olive-residue oil, and an evaporator for separating the solvent from the olive-residue oil.

Optionally, downstream of the means for performing pyrolysis, the apparatus also comprises one or more of the following:
- means for producing biodiesel starting from the olive-residue oil recovered by deoiling. These means advantageously comprise at least one reactor, in which the catalytic transesterification of the olive-residue oil with lower alcohols (typically methyl and/or ethyl alcohol) is performed in order to form a mixture of esters of the fatty acids that constitute biodiesel and glycerin, and two successive elements for separating the biodiesel from the glycerin and for removing and recovering the excess of lower alcohols used in the transesterification reaction.
- means for performing the catalytic combustion of the volatile organic fraction isolated by pyrolysis, comprising a reactor inside which commercial catalysts as defined above are placed, advantageously in the form of pellets, rings, et cetera. The volatile organic fraction from pyrolysis is made to flow within said means, advantageously diluted with air and burnt gases in output from said means. One of the purposes of this dilution is to avoid treating in the combustor mixes that are too rich in combustible gases, which would cause an unwanted increase in temperature, with the consequent risk of catalyst deactivation.

The carbon residue obtained after the pyrolysis, in order to be activated, must be treated with water vapor in order to clear the pores that are present in the carbon structure. This treatment is performed preferably at 450 to 650 °C and entails a carbon weight reduction of 30 to 45%.

Optionally, downstream of the means for performing catalytic combustion, the apparatus also comprises means for cooling the burnt gases and for recovering their heat, generating high-pressure steam (generally at 15-20 bars). These means comprise, for example, water-gas exchangers. Downstream of said means suitable for heat recovery, the apparatus comprises optionally one or more turbine-alternator systems for generating energy starting from the pressurized steam.

As an alternative to, or in combination with, the means for mixing the volatile organic fraction from pyrolysis and the means for performing catalytic combustion of the same mixed fraction, the apparatus also comprises hot gas-water heat exchangers for cooling the burnt gases and generating process steam at low pressure (generally at 5-10 bars) and/or hot water.

In a different embodiment, the apparatus is adapted to perform a combined method for the complete disposal of solid or semisolid oil waste, such as olive residues from two- or three-step extraction processes and liquid oil waste such as VW.

In this embodiment, the apparatus comprises, in addition to the elements mentioned above, at least means for mixing the VW to be treated with the coagulating-flocculating composition. Means adapted to provide disposal of VW are described in detail in the co-pending application entitled "Method, apparatus and synergistic composition for the disposal of agroalimentary wastewater", by the same Applicant as the present application and filed on the same date as the present application. Preferably, the means adapted to provide disposal of the VW are arranged in parallel with respect to the olive residue disposal means.

Examples of means adapted to perform disposal of VW are at least one mixer. In a particular embodiment, the apparatus comprises, advantageously in parallel:
- means adapted to convey, feed and dose the components of the coagulating-flocculating composition,
- means for mixing the VW to be treated with the coagulating-flocculating composition, and
- means for handling the resulting mixture.

The mixing and handling means are advantageously at least one slow mixer and low-rpm volumetric conveyance pumps adapted to facilitate and keep in suspension the flocculate and preserve floc size without breaking it up.

In one embodiment, the apparatus also comprises, after the means for mixing the VW with the coagulating-flocculating composition, means for separating the solid-liquid components generated by coagulation-flocculation. In a preferred embodiment, said means are one or more among settling tanks, filters, centrifuges, preferably at least centrifuges, optionally followed by other means for compressing and/or drying the solid filtrate recovered from separation.

In a different embodiment, the apparatus, after the solid-liquid separation means and any means for compressing and/or drying the solid filtrate, also comprises liquid-liquid component separation means suitable to segregate by molecular cut-off the valuable substances in solution in the liquid generated by coagulation-flocculation. Said liquid-liquid component separation means are for example at least one membrane separator, wherein each separator can operate independently on the basis of the principle of ultrafiltration, microfiltration and reverse osmosis. Since ultrafiltration, microfiltration and reverse osmosis separate molecules with progressively smaller dimensions, these techniques, in order to be effective, if present simultaneously, must be performed in the order in which they have been listed here. However, to provide osmosis it might not be necessary to also perform the first two beforehand. Each liquid-liquid separator can use membranes with a different and progressive cut-off, so as to optimize according to size the recovery of the solid substances initially suspended in the wastewater. In the case of progressive use of ultrafiltration, microfiltration and reverse osmosis, it is possible to remove from the wastewater substances up to the macromolecular size.

Advantageously, the last membrane separator is provided by means adapted to allow partial or total recycling of water with low COD in the method itself (for example for preparing the synergistic coagulating-flocculating composition in the form of an aqueous suspension).

In one embodiment, the apparatus also comprises, upstream of the means for mixing the VW with the coagulating-flocculating composition, means for storing the VW to be treated, avoiding its contact with air and with environmental microbiological contaminants (see step a1) of the combined method). Said means are, for example, one or more tanks or containers, advantageously provided with a hermetic closure, advantageously also provided with conventional means adapted to maintain within said tanks or containers an overpressure of an inert gas. The wastewater is then drawn from said tanks or containers and sent, for example in batches, to the disposal treatment.

Although only some preferred embodiments of the invention have been described in the text, the person skilled in the art will readily understand that it is possible in any case to obtain other equally advantageous and preferred embodiments.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for the disposal of at least one solid or semisolid waste originating from the production of olive oil, comprising the step of:
(A) subjecting said waste to pyrolysis, thus recovering a carbon residue and removing a volatile organic fraction contained initially in said waste.

2. The method according to claim 1, wherein said at least one solid or semisolid waste is olive residue with a degree of humidity ranging from 48% to 62% by weight on the total weight of the olive residue.

3. The method according to claim 1 or 2, wherein the waste is olive residue originating from three-step extraction processes and the method comprises the following steps, to be performed in the order given here:
(A1) deoiling the waste, thus obtaining a solid portion and an oily liquid portion, and
(A) subjecting the solid portion obtained from step (A1) to a step of pyrolysis, thus recovering a carbon residue and removing a volatile organic fraction contained initially in said waste.

4. The method according to one or more of the preceding claims, wherein the heating temperature in pyrolysis ranges from 450 °C to 650 °C, while the contact time ranges from 30 minutes to 20 minutes in inverse proportion to the selected temperature.

5. The method according to one or more of the preceding claims, further comprising one or more of the following steps:
(B) subjecting the oily liquid portion obtained from step (A1) to a transesterification reaction with one or more lower alcohols selected among methyl alcohol, ethyl alcohol, and mixtures thereof, thus converting said oily liquid portion into biodiesel;
(C) subjecting the volatile organic fraction removed in step (A) to catalytic combustion, thus recovering energy contained in the chemical bonds of the molecules that are present in said volatile organic fraction;
(D) subjecting the carbon residue recovered in step (A) to activation with water vapor;
wherein steps (B), (C) and (D) can be performed in any mutual order, but after steps (A1) and (A).

6. The method according to claim 5, wherein step (C) occurs at a temperature ranging from 400 °C to 600 °C and in the presence of a catalyst bed based on commercial mixed oxides.

7. The method according to claim 5, wherein step (C) is preceded by a step for mixing the volatile organic fraction removed in step (A) with:
- air, and with
- a recycled portion of gases produced by the catalytic combustion of volatile organic fractions burned earlier.

8. The method according to claim 5, wherein step (C) is followed by one or more of the following steps:
- a step (C2) for cooling the burnt gases in output from step (C), recovering steam at a pressure ranging from 15 to 20 bars;
- a step (C3) for cooling the burnt gases in output from step (C), recovering steam at a pressure ranging from 5 to 10 bars and/or hot water.

9. The method according to one or more of the preceding claims, comprising the two following groups of phases, wherein:
the first group comprises:
A) subjecting to pyrolysis at least one solid or semisolid waste originating from the production of olive oil, thus recovering a carbon waste and removing a volatile organic fraction contained initially in said waste;
and the second group comprises:
(a) placing in contact at least one VW with a composition comprising at least one clay and at least one polyelectrolyte, so as to trigger coagulation-flocculation of the solids suspended in said at least one VW and determine the formation of a solid component and a liquid component;
wherein the two groups of steps can be performed independently in series, in parallel, simultaneously, sequentially or separately over time.

10. The method according to claim 9, wherein the at least one clay is bentonite, preferably food-grade bentonite.

11. The method according to claim 9, wherein the at least one clay and the at least one polyelectrolyte are added to the at least one VW in the form of an aqueous dispersion.

12. The method according to claim 9, wherein the at least one clay is present in a quantity ranging from 2.8 g/kg of VW to 17.5 g/kg of VW, preferably from 7 g/kg of VW to 14.5 g/kg of VW, more preferably equal to 10.7 g/kg of VW, while the at least one polyelectrolyte is present in a quantity ranging from 0.14 g/kg of VW to 0.75 g/kg of VW, preferably from 0.25 g/kg of VW to 0.6 g/kg of VW, more preferably equal to 0.48 g/kg of VW.

13. The method according to claims 10 and 11, wherein for 700 g of VW, 150 g of an aqueous dispersion of 50 g of bentonite per liter of water and 170 g of an aqueous dispersion of 2 g of polyelectrolyte per liter of water are added.

14. The method according to one or more of claims 9 to 13, wherein the second group of steps comprises the following steps, to be performed in the order in which they are listed:
a) placing in contact at least one VW with a composition comprising at least one clay and at least one polyelectrolyte, so as to trigger coagulation-flocculation of the solids suspended in said at least one VW and determine the formation of a solid component and a liquid component;
b) separating the solid-liquid components of the flocculated VW of step a), preferably by means of one or more among decantation, filtration, centrifugation, more preferably at least by centrifugation, so as to obtain a solid mass and a liquid,
c) separating by molecular weight the different substances contained in solution in the liquid obtained in step b), by means of one or more molecular filtration techniques, preferably selected among ultrafiltration, microfiltration, and reverse osmosis.

15. The method according to claim 14, wherein step c) comprises ultrafiltration, microfiltration and reverse osmosis, performed in the order in which they are listed here.

16. The method according to claim 14 or 15, further comprising an additional step a1), preparatory to step a), of storing the at least one VW to be disposed of in a manner adapted to avoid its putrefaction/going rancid due to contamination by ambient microorganisms.

17. The apparatus for performing a method according to one or more of claims 1 to 16, said apparatus comprising means for performing pyrolysis of a solid or semisolid waste originating from the production of olive oil.

18. The apparatus according to claim 17, further comprising, upstream of the means for performing waste pyrolysis, means for deoiling the waste.

19. The apparatus according to claim 17, further comprising, downstream of the means for performing pyrolysis, means for producing biodiesel.

20. The apparatus according to claim 17, further comprising, downstream of the means for performing pyrolysis, means for performing catalytic combustion of the volatile organic fraction isolated by pyrolysis.

21. The apparatus according to one or more of claims 17 to 20, further comprising, downstream of the means for performing pyrolysis, means for performing the thermal activation of the carbon residue obtained from pyrolysis.

22. The apparatus according to claim 20, further comprising, downstream of the means for performing catalytic combustion, means for cooling the burnt gases and recover their heat, generating high-pressure steam.

23. The apparatus according to claim 20, further comprising, downstream of the means for performing catalytic combustion, means for cooling the burnt gases and recover their heat, generating low-pressure process steam and/or hot water.

24. The apparatus according to one or more of claims 17 to 23, further comprising means for mixing at least one vegetable water originating from the production of olive oil, with a coagulating-flocculating composition which comprises at least one clay and at least one polyelectrolyte.

25. The apparatus according to claim 24, comprising:
i) means adapted to convey, feed and dose the components of the coagulating-flocculating composition,
ii) means for mixing the at least one VW to be treated with the coagulating-flocculating composition, and
iii) means for handling the resulting mixture.

26. The apparatus according to claim 24, further comprising, downstream of the mixing means ii) and, if present, the handling means iii), means for separating the solid-liquid components generated by coagulation-flocculation.

27. The apparatus according to claim 26, further comprising, downstream of the means for separating the solid-liquid components generated by coagulation-flocculation, means for separating liquid-liquid components which are adapted to segregate by molecular cut-off the valuable substances in solution in the liquid generated by coagulation-flocculation.

28. The apparatus according to claim 27, wherein the means for separating liquid-liquid components comprise at least one membrane separator for molecular filtration, selected among one or more of ultrafiltration separators, microfiltration separators, and reverse-osmosis separators.
